(19) Europäisches Patentamt
European Patent Office
Office européen des brevets

(11) **EP 1 358 583 B1**

(12) **FASCICULE DE BREVET EUROPEEN**

(45) Date de publication et mention
de la délivrance du brevet:
**26.03.2008 Bulletin 2008/13**

(51) Int Cl.:
***G06F 17/30*** *(2006.01)*

(21) Numéro de dépôt: **02701352.3**

(86) Numéro de dépôt international:
**PCT/FR2002/000360**

(22) Date de dépôt: **30.01.2002**

(87) Numéro de publication internationale:
**WO 2002/061616 (08.08.2002 Gazette 2002/32)**

(54) **PROCEDE DE CODAGE ET DE DECODAGE D'UN CHEMIN DANS L'ARBORESCENCE D'UN DOCUMENT STRUCTURE**

VERFAHREN ZUR CODIERUNG UND DECODIERUNG EINES PFADES IN DER BAUMSTRUKTUR EINES STRUKTURIERTEN DOKUMENTS

METHOD FOR ENCODING AND DECODING A PATH IN THE TREE STRUCTURE OF A STRUCTURED DOCUMENT

(84) Etats contractants désignés:
**AT BE CH CY DE DK ES FI FR GB GR IE IT LI LU MC NL PT SE TR**

(30) Priorité: **30.01.2001 FR 0101243**

(43) Date de publication de la demande:
**05.11.2003 Bulletin 2003/45**

(73) Titulaire: **Expway
51100 Reims (FR)**

(72) Inventeurs:
• **SEYRAT, Claude**
  **F-75001 Paris (FR)**
• **THIENOT, Cédric**
  **F-75011 Paris (FR)**

(74) Mandataire: **Bentz, Jean-Paul et al
Novagraaf Technologies
Cabinet Ballot
122, rue Edouard Vaillant
92593 Levallois-Perret Cedex (FR)**

(56) Documents cités:
**WO-A-97/34240**

• **LIEFKE H ET AL: "XMILL: AN EFFICIENT COMPRESSOR FOR XML DATA" SIGMOD RECORD, ASSOCIATION FOR COMPUTING MACHINERY, vol. 29, no. 2, juin 2000 (2000-06), pages 153-164, XP001002286 NEW YORK, NY, US**
• **"ICT'S XML-XPRESS" INTERNET ARTICLE, [en ligne] décembre 2000 (2000-12), pages 1-6, XP002179806 INTELLIGENT COMPRESSION TECHNOLOGIES, INC., QUINCY, MA, US Extrait de l'Internet: <URL:http://www.ictcompress.com/XML_WhiteP aper.pdf> [extrait le 2001-10-10]**
• **GIRARDOT M ET AL: "MILLAU: AN ENCODING FORMAT FOR EFFICIENT REPRESENTATION AND EXCHANGE OF XML OVER THE WEB" COMPUTER NETWORKS AND ISDN SYSTEMS, NORTH HOLLAND PUBLISHING, vol. 33, no. 1-6, juin 2000 (2000-06), pages 747-765, XP001005949 AMSTERDAM, NL ISSN: 0169-7552**

**Description**

La présente invention concerne un procédé de codage et de décodage d'un chemin dans une arborescence de document structuré.

Elle s'applique notamment, mais non exclusivement, à la compression/ décompression de parties de documents structurés. De tels documents consistent par exemple en des données structurées multimédia, d'images ou de séquences d'images vidéo ou numériques, des oeuvres cinématographiques ou des programmes vidéo, ou des données décrivant de telles informations.

Un document structuré est une collection d'ensembles d'informations associés chacun à un type et des attributs, et composés entre eux selon des relations principalement hiérarchiques. Ces documents emploient un langage de structuration tel que SGML, HTML, XML, permettant notamment de distinguer les différents sous-ensembles d'informations composant le document. Par opposition, dans un document dit linéaire, les informations de contenu du document sont mélangées aux informations de présentation et de typage.

Un document structuré inclut des repères de séparation des différents ensembles d'informations du document. Dans le cas des formats SGML, XML, ou HTML, ces repères appelés "balises" sont de la forme "<XXXX>" et "</XXXX>", le premier repère indiquant le début d'un ensemble d'informations "XXXX" et le second la fin de cet ensemble. Un ensemble d'informations peut être composé de plusieurs ensembles d'informations de plus bas niveau. Ainsi, un document structuré présente un schéma de structure hiérarchique ou arborescente, chaque noeud représentant un ensemble d'informations et étant relié à un noeud de niveau hiérarchique supérieur représentant un ensemble d'informations qui contient les ensembles d'informations de niveau inférieur. Les noeuds situés en bout de branche de cette structure arborescente représentent des ensembles d'informations contenant des données d'un type prédéfini, qui ne peuvent pas être décomposées en sous-ensembles d'informations.

Ainsi, un document structuré contient des repères de séparation représentés sous la forme de données textuelles ou binaires, ces repères délimitant des ensembles ou sous-ensembles d'informations pouvant eux-mêmes contenir d'autres sous-ensembles d'informations délimités par des repères.

Par ailleurs, un document structuré est associé à ce qu'on appelle un schéma de structure définissant sous la forme de règles la structure et le type d'information de chaque ensemble d'informations du document. Un schéma est constitué de groupes imbriqués de structures d'ensembles d'informations, ces groupes pouvant être des séquences ordonnées, des groupes d'éléments alternatifs ou des groupes d'éléments nécessaires, ordonnés ou non ordonnés.

A l'heure actuelle, lorsqu'un document structuré doit être transmis, il est de préférence préalablement compressé, de manière à minimiser le volume des données à transmettre. Pour une plus grande efficacité d'un tel traitement de compression, les données de structuration du document sont également compressées, sachant que le destinataire du document est sensé connaître au préalable le schéma de structure du document et peut utiliser ce schéma pour déterminer à chaque instant quel ensemble d'informations il va recevoir. Il est donc indispensable que la structure du document transmis corresponde exactement au schéma de structure que le destinataire du document envisage d'utiliser pour la réception et le décodage du document, faute de quoi, le destinataire ne peut pas déterminer le type des données transmises notamment, et donc est incapable de les décoder et de reconstituer le document d'origine.

Or les documents structurés à transmettre ont tendance à devenir de plus en plus volumineux. On envisage par exemple de transmettre ou diffuser de cette manière des descriptions complètes d'oeuvres cinématographiques ou de programmes de télévision.

Dans ce contexte, si une erreur de transmission survient durant la transmission d'un document, le destinataire du document peut ne plus être en mesure de déterminer quel sous-ensemble est en cours de transmission, si bien que l'ensemble du document doit à nouveau être transmis. En outre, si l'on souhaite transmettre et simultanément afficher sur un écran une séquence cinématographique, il peut être nécessaire de respecter des plages horaires de transmission des différents éléments de la séquence. Certains éléments de la séquence doivent en outre pouvoir être transmis plusieurs fois pour permettre à un destinataire qui n'était pas connecté au début de la transmission de la séquence, de recevoir et afficher la fin de celle-ci.

Il peut être également nécessaire de remplacer une partie de document par une autre, ces deux parties ayant le même schéma de structure.

La solution consistant à retransmettre l'ensemble du document conduirait à augmenter considérablement le volume des informations à transmettre. Il est donc souhaitable de diviser un document en plusieurs parties qui peuvent être utilisées ou transmises séparément. Toutefois, pour pouvoir décompresser une partie de document, il est nécessaire de pouvoir déterminer où se situe cette partie de document dans le schéma de structure du document.

A cet effet, il existe plusieurs solutions consistant à décrire un chemin dans l'arborescence du document, à partir du noeud racine du document, pour atteindre le noeud principal de la partie de document considérée. Pour cela, on a mis au point des méthodes de description de chemins dans une arborescence. Toutefois, ces méthodes ne sont pas optimisées en terme de nombre d'éléments d'information nécessaires pour décrire un tel chemin. En outre, ces méthodes ne prennent pas en compte toutes les possibilités qui existent dans la définition d'un schéma de structure d'un document, si bien qu'elles ne garantissent pas dans tous les cas que le chemin qui sera reconstitué, corresponde au chemin d'origine. Il en résulte donc des risques d'erreur dans la détermination de la position dans l'arborescence du document d'une partie de ce dernier, et donc des risques d'erreur, voire d'impossibilité de décodage de la partie de document.

Ainsi, le langage XML-schema, couramment utilisé dans les documents structurés, permet ce que l'on appelle le polymorphisme, c'est-à-dire que l'on peut définir des sous-types d'un type de données structuré, les sous-types étant des cas particuliers de données correspondant au type. Par exemple dans un type "chaîne de caractères" on peut trouver un sous-type "mois de l'année". Dans ce cas, le modèle de structure peut indiquer qu'un noeud de l'arborescence est de type "chaîne de caractère" et le document comprendre au niveau de ce noeud un ensemble d'informations de type "mois de l'année". Ce langage autorise également des substitutions de noms d'ensembles d'informations. Il s'avère que les méthodes de codage de chemin actuelles ne prennent pas en compte ces possibilités.

La présente invention a pour but de supprimer ces inconvénients. Cet objectif est atteint par la prévision d'un procédé de codage d'un chemin dans une structure hiérarchique de document structuré, définie par un schéma de structure de document, ce chemin étant défini par une succession de segments, chaque segment reliant un noeud origine et un noeud destination, chaque noeud représentant un élément d'informations du document, chaque élément d'informations étant associé dans le schéma de structure à au moins un type d'informations, caractérisé en ce qu'il comprend :

- une phase préalable comportant une étape consistant à associer à chaque noeud considéré du schéma de structure, une liste de couples constitués d'un nom et un type d'élément d'informations, représentés par tous les noeuds susceptibles d'être rattachés directement au noeud considéré, et à associer un code binaire respectif à chaque couple de nom et type d'élément d'informations, et

- une phase de codage du chemin comprenant une étape consistant pour chaque segment du chemin à coder, à déterminer et insérer dans le code de chemin un code binaire de noeud associé au couple nom - type du noeud destination du segment.

Avantageusement, la phase de codage de chemin comporte en outre une étape consistant à déterminer un code binaire de position du noeud destination du segment, par rapport aux autres noeuds susceptibles d'être rattachés directement au noeud d'origine du segment.

Selon une particularité de l'invention, la phase de codage de chemin comporte en outre une étape consistant à générer un code de chemin comprenant une succession de codes de segments, chaque code de segment comprenant un code binaire de noeud du noeud destination du segment, et un code binaire de position du noeud destination du segment.

Selon une autre particularité de l'invention, la phase de codage de chemin comporte en outre une étape consistant à générer un code de chemin comprenant une succession de codes de segments, chaque code de segment comprenant un code binaire de noeud du noeud destination du segment, et une séquence de codes de position donnant la position de tous les noeuds référencés dans la succession de code de segments.

De préférence, la phase préalable comprend en outre une étape consistant à déterminer un nombre maximum de noeuds susceptibles d'être rattachés directement au noeud considéré, pour déterminer la taille du code binaire de position de noeud.

Selon une autre particularité de l'invention, au moins l'un des éléments d'informations de la structure du document comprend des attributs, le chemin à coder ayant pour élément destination un attribut, la phase de codage comprenant en outre une étape d'insertion dans le code de chaque segment d'un code de type de segment indiquant si le noeud destination du segment est un attribut ou un élément d'informations.

Selon encore une autre particularité de l'invention, la phase de codage comprend en outre une étape d'insertion dans le code de chemin d'un code de fin de chemin.

De préférence, le code de fin de chemin est un code de type de segment ayant une valeur prédéfinie.

Selon encore une autre particularité de l'invention, le noeud d'origine de chaque segment est situé à un niveau hiérarchique supérieur à celui du noeud destination dans le schéma de structure du document, et en ce que la phase de codage comprend en outre une étape d'insertion dans le code de chemin d'au moins un code de type de segment ayant une valeur prédéfinie indiquant que le noeud d'origine du segment à coder suivant est le noeud de destination du segment à coder précédent.

Selon encore une autre particularité de l'invention, la phase de codage comprend en outre une étape d'insertion dans le code de chemin d'un code indiquant si le chemin codé est un chemin absolu depuis le noeud racine du document, ou un chemin relatif depuis un noeud quelconque du schéma de structure du document.

L'objet de l'invention concerne également un procédé de décodage d'un code de chemin dans une structure hiérarchique de document structuré, définie par un schéma de structure de document, ce code de chemin comprenant une succession de codes de segments, chaque segment reliant un noeud d'origine à un noeud de destination constituant le noeud d'origine du segment suivant, chaque noeud représentant un élément d'informations du document, chaque élément d'informations étant associé dans le schéma de structure à au moins un type d'informations, caractérisé en ce que chaque segment est défini dans le code de chemin au moins par un code binaire de noeud représentant un couple nom - type, constitué d'un nom et d'un type d'élément d'informations de l'élément d'information représenté par le noeud de destination du segment, le procédé comprenant :

- une phase préalable consistant à associer à chaque noeud considéré du schéma de structure, une liste de couples nom - type d'élément d'informations constitués d'un nom et d'un type d'éléments d'informations, représentés par tous les noeuds susceptibles d'être rattachés directement au noeud considéré, et à associer un code binaire respectif à chaque couple nom - type d'élément d'informations, et

- une phase de décodage du code de chemin consistant pour segment du code de chemin à décoder, à décoder le code de noeud représentant le couple nom, type du noeud destination du code de segment à l'aide de la liste des couples nom - type du noeud destination.

Avantageusement, chaque segment comprend en outre dans le code de chemin à décoder un code de position du noeud de destination par rapport aux autres noeuds susceptibles d'être reliés directement au noeud d'origine du segment, la phase de décodage comprenant en outre une étape consistant pour chaque segment, à décoder le code binaire de position du noeud destination du segment, en fonction des positions respectives de tous les noeuds susceptibles d'être rattachés directement au noeud d'origine du segment.

Selon une particularité de l'invention, le décodage du code binaire de noeud représentant le couple nom - type d'élément d'informations comprend une étape de détermination de la taille en nombre de bits de ce code et de recherche de ce code dans la liste des couples nom - type du noeud d'origine du segment.

Selon une autre particularité de l'invention, le décodage du code binaire de position du noeud destination du segment comprend la détermination de la taille en nombre de bits de ce code en fonction du nombre maximum de noeuds susceptibles d'être rattachés directement au noeud d'origine du segment.

De préférence, chaque code de segment comprend un code de type de segment, la phase de décodage du chemin comprenant en outre pour chaque segment, le décodage du code de type de segment.

Avantageusement, le code de type de segment de chaque code de segment du code de chemin permet de déterminer si le segment a pour noeud de destination un élément d'information ou un attribut du noeud d'origine du segment.

Selon une autre particularité de l'invention, le procédé comprend la détermination de la fin du code de chemin, qui est marquée par un code de type de segment ayant une première valeur prédéfinie.

De préférence, si le code de type de segment a une seconde valeur prédéfinie, le code de segment à décoder suivant dans le code de chemin a pour noeud de destination le noeud d'origine du segment à décoder précédent.

Un mode de réalisation préféré de l'invention sera décrit ci-après, à titre d'exemple non limitatif, avec référence aux dessins annexés dans lesquels :

Les figures 1a et 1b représentent une partie d'une structure arborescente de document structuré, dont chaque noeud symbolise un ensemble ou sous-ensemble d'informations, respectivement avant et après la définition d'une branche entre deux noeuds ;

La figure 2 représente la structure générale d'un chemin selon l'invention dans une arborescence de structure de document ;

La figure 3 montre sous la forme d'un organigramme le traitement exécuté par un calculateur de codage de chemin, selon l'invention ;

La figure 4 montre sous la forme d'un organigramme le traitement exécuté par un calculateur de décodage selon l'invention.

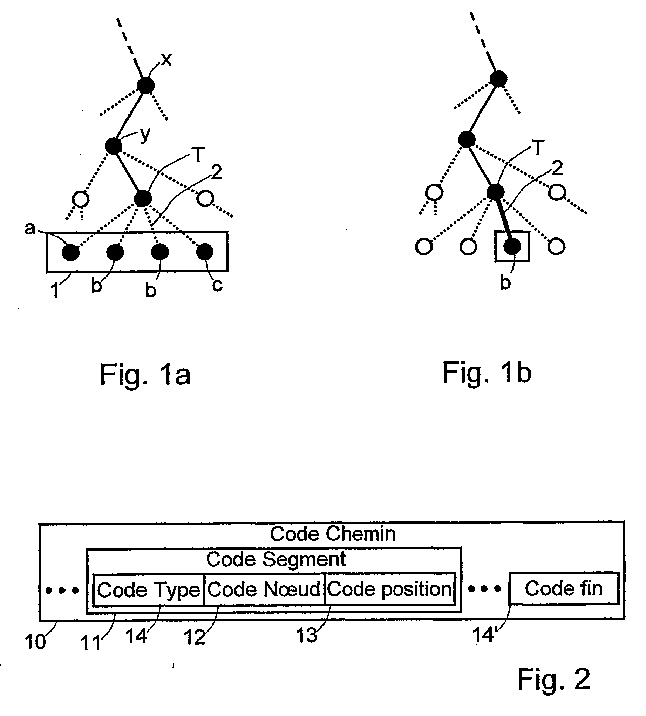

La figure 1a représente un schéma de structure d'un document structuré comprenant un noeud x qui n'est pas nécessairement le noeud racine du document. Ce noeud x se décompose en trois noeuds, seul le second noeud y étant représenté. Ensuite le noeud y se décompose en trois noeuds dont le second noeud est T, lequel comprend quatre noeuds a, b, b et c indiqués sur la figure par un cadre 1.

L'ensemble d'information correspondant au noeud T est défini par le schéma de structure suivant :

```
<complexType name="T">
  <choice minOccurs="2" maxOccurs="4">
     <element ref="a" minOccurs="0" maxOccurs=" 1 "/>
     <element ref="b" minOccurs="1" maxOccurs=" 1 "/>
     <element name="c" type="te"/>
  </choice>
</complexType>
```

Cela signifie que le type complexe T comprend deux ou trois occurrences d'un groupe d'éléments alternatifs (type "choice") comprenant au plus un élément a, un élément b et un élément c de type tc. Cette structure peut également être représentée d'une manière plus compacte de la manière suivante :

$$\text{CHOICE[2,4](a[0,1], b[1,1], c[1,1])}$$

Les champs introduisant les éléments a et b font référence à une définition de ces éléments, figurant plus loin dans le schéma de structure du document, du type :

```
<element name="a" type="ta"/>
<element name="b" type="tb"/>
```

Le schéma de structure comprend ensuite la définition des types ta, tb et tc qui sont définis d'une manière analogue au type T. Il peut comprendre également des instructions de substitution d'éléments, comme suit :

```
<element name="a1" type="ta1" substitutionGroup="a"/>
```

Cette instruction indique que l'élément a1 de type ta1 peut être substitué à un élément a. Dans le cas, le type ta1 constitue un sous-type de ta. De même, le type tb peut comprendre un sous-type td. De tels sous-types sont définis dans un schéma de structure de la manière suivante, en utilisant la balise "restriction" ou "extension" prévue à cet effet :

```
<complexType name="tal ">
  <restriction base="ta">
     ...
  </restriction>
</complexType>

<complexType name="td">
  <restriction base="tb">
     ...
  </restriction>
</complexType>
```

Selon la norme XML-Xpath, le second noeud b, relié au noeud T, est repéré de la manière suivante :

$$\ldots\text{/T/b[1]}$$

Cette notation référence le premier noeud b relié au noeud T.

Il s'avère que cette notation n'est pas optimale du point de vue de la taille du mot binaire nécessaire à sa représentation, et ne permet pas de tenir compte de toutes les spécificités autorisées par le langage XML-schema, telles que le polymorphisme (possibilité de définir des sous-types d'un type d'élément d'informations), ou encore la possibilité de remplacer un élément d'un type par un autre ayant le même type ou un sous-type du même type.

Conformément au procédé selon l'invention, on commence tout d'abord par analyser le schéma de structure du type complexe T du noeud d'origine du segment 2 reliant le noeud T au noeud b, que l'on cherche à référencer. Cette analyse à pour but de construire un tableau dans lequel on recense tous les éléments susceptibles d'appartenir à la structure du type complexe T et tous les types possibles de ces éléments. Dans le cas du type T, on obtient le tableau suivant :

Tableau 1

| Élément | Types possibles | Éléments de substitution |
|---------|-----------------|--------------------------|
| a | $t_a$, $t_{a1}$ | a1 |
| a1 | $t_{a1}$ | *Aucun* |
| b | $t_b$, $t_d$ | *Aucun* |
| c | $t_c$ | *Aucun* |

Ce tableau indique, conformément à la définition du schéma en XML, que l'élément a est substituable par l'élément a1.

A partir de ce tableau, on détermine la liste de tous les couples (élément, type) du type complexe T, ces couples étant rangés dans un ordre prédéterminé, par exemple par ordre alphabétique de noms d'éléments d'informations et de noms de types d'éléments d'informations. Ensuite, à chaque couple, on associe un code binaire, obtenu par exemple en les numérotant séquentiellement dans l'ordre où ils sont rangés, ce qui permet d'obtenir le tableau suivant :

Tableau 2

| Code | Couple (élément, type) |
|------|------------------------|
| 000 | $(a, t_a)$ |
| 001 | $(a, t_{a1})$ |
| 010 | $(a1, t_{a1})$ |
| 011 | $(b, t_b)$ |
| 100 | $(b, t_d)$ |
| 101 | $(c, t_c)$ |
| 110 | Réservé |
| 111 | Réservé |

D'une manière générale, il faut un code sur k bits pour numéroter des objets dont le nombre est compris entre $2^{k-1}+1$ et $2^k$. Inversement, si N est le nombre de couples, le codage de ces couples peut être effectué sur $E(\log_2(N))$ bits (E(x) étant la fonction "partie entière"). Les codes non utilisés pour la numérotation peuvent être réservés pour effectuer des opérations de vérification lors du décodage du chemin.

Ensuite, il s'agit de définir le nombre M d'éléments possibles contenus dans le noeud origine du segment. D'une manière générale, il faut distinguer selon que l'on a affaire à un groupe d'éléments de type "séquence" (groupe d'éléments ordonnés), de type "choice" (groupe d'éléments alternatifs) ou de type "all" (groupe d'éléments nécessaires, ordonnés ou non) ou à un élément simple, chaque élément pouvant bien entendu représenter un groupe d'éléments de niveau hiérarchique inférieur ou un élément simple.

Un groupe d'éléments e1, e2, ..., en de type "séquence" (liste d'éléments ordonnés) peut être représenté de la manière suivante :

$$\text{SEQ}[\min_{seq}, \max_{seq}](e1[\min_{e1}, \max_{e1}], e2[\min_{e2}, \max_{e2}], \ldots, en[\min_{en}, \max_{en}])$$

dans lequel "$\min_i$" et "$\max_i$" représentent les nombres minimum et maximum d'occurrences de l'élément ei.

Si l'un des nombres d'occurrences maximum $\max_i$ est indéfini ou non borné, alors le nombre maximum M de positions possibles d'un tel groupe n'est pas borné. Dans le cas contraire, il est obtenu à l'aide de la formule suivante :

$$M = \max_{seq} \cdot \sum_{k=1}^{n} \max_{ek} \qquad (1)$$

Le nombre minimum m d'occurrences peut être obtenu à l'aide de la formule suivante :

$$m = \min_{seq} \cdot \sum_{k=1}^{n} \min_{ek} \qquad (2)$$

Un groupe d'éléments de type CHOICE (groupe d'éléments alternatifs) peut être représenté de la manière suivante :

$$CHOICE[\min_{ch}, \max_{ch}](e1[\min_{e1}, \max_{e1}], e2[\min_{e2}, \min_{e2}], \ldots, en[\min_{en}, \max_{en}])$$

Si l'un des nombres d'occurrences maximum $\max_i$ est indéfini ou non borné, alors le nombre maximum M de positions possibles d'un tel groupe n'est pas borné. Dans le cas contraire, il est obtenu à l'aide de la formule suivante :

$$M = \max_{ch} \cdot \max_{k=1}^{n}(\max_{ek}) \qquad (3)$$

$$M_j = (\max_{ch} - 1) \cdot \max_{k=1}(\max_{ek}) + \max_{ej}$$

max() étant une fonction donnant la valeur maximum de toutes les valeurs en paramètre.

Le nombre d'occurrence minimum m d'un groupe de type "choice" est quant à lui donné par la formule suivante :

$$m = \min_{ch} \cdot \min_{k=1}^{n}(\min_{ek}) \qquad (4)$$

min() étant une fonction donnant la valeur minimum de toutes les valeurs en paramètre.

Un groupe d'éléments de type "all" (liste d'éléments non ordonnés) peut être représenté de la manière suivante :

$$ALL[\min_{all}, \max_{all}](e1[\min_{e1}, \max_{e1}], e2[\min_{e2}, \min_{e2}], \ldots, en[\min_{en}, \max_{en}])$$

Les nombres d'occurrences maximum M et minimum m d'un tel groupe sont obtenus à l'aide des mêmes formules (1) et (2) que pour un groupe de type SEQ.

Dans le cas d'un élément simple ek, les nombres d'occurrences maximum M et minimum m de l'élément sont directement donnés par le schéma de structure du document.

Si le nombre d'éléments maximum M ainsi obtenu est borné ou inférieur à une certaine limite par exemple $2^{16}$, alors le codage de la position d'un élément requiert $E(\log_2(M))$ bits.

Dans le cas contraire, il faut adopter un codage qui puisse coder n'importe quel nombre entier. On peut ainsi par exemple coder un tel nombre par groupes d'un nombre prédéfini de bits, par exemple 5 bits, le premier bit d'un groupe indiquant si oui ou non les quatre bits suivants sont les derniers bits de codage du nombre.

Si dans l'exemple précédent représenté sur la figure 1b, on veut référencer le segment 2 reliant l'élément T au troisième élément (repéré par le cadre 3), du noeud T, nommé b et de type td. Compte tenu du Tableau 2, du nombre maximum de positions possibles en aval du noeud T et de la position du noeud b (troisième noeud) parmi ces positions possibles, le segment 2 porte le numéro :

"100 10".

En effet, le nombre de bits requis pour coder six éléments (voir Tableau 2) est trois. En outre, le nombre maximum de positions possibles en aval de l'élément T (dans le cadre 1) est 4, ce qui nécessite un codage sur deux bits.
Dans le cas d'un groupe de type SEQ, ce codage peut avantageusement être optimisé suivant deux méthodes, sachant que lorsque tous les éléments d'une séquence ne sont pas optionnels, leur position dans le groupe est définie d'une manière fixe.
Selon la première méthode, on calcule les limites entre lesquelles la position de chaque élément $e_i$ de la séquence peut varier, ce qui permet de réduire le nombre de bits nécessaire au codage de la position de l'élément. Ces limites de position $P_{min}$ et $P_{max}$ pour un élément $e_i$ ($1 \leq i \leq n$, n étant le nombre d'éléments de la séquence) peuvent être obtenues à l'aide des formules suivantes :

$$P_{min_i} = 1 + \sum_{k=1}^{i-1} min_{ek} \qquad (5)$$

$$P_{max_i} = \sum_{k=1}^{i} max_{ek} + (max_{seq} - 1)\sum_{k=1}^{n} max_{ek} \qquad (6)$$

Selon la seconde méthode, on calcule les valeurs des positions possibles de chaque élément $e_i$ de la séquence, pour chaque occurrence j de la séquence ($min_{seq} \leq j \leq max_{seq}$), à l'aide des formules suivantes :

$$P_{min_{i,j}} = 1 + \sum_{k=1}^{i-1} min_{ek} + (j-1)\sum_{k=1}^{n} min_{ek} \qquad (7)$$

$$P_{max_{i,j}} = \sum_{k=1}^{i} max_{ek} + (j-1)\sum_{k=1}^{n} max_{ek} \qquad (8)$$

Le tableau suivant a été réalisé pour le groupe SEQ[1,3](a[1,1], b[1,1]). Ce tableau donne pour chaque méthode de codage, et chaque élément du groupe, les numéros des positions possibles, et le nombre de bits nécessaire au codage de la position de l'élément.

Tableau 3

| élément | sans optimisation | | Méthode 1 | | méhode 2 | |
|---------|------|--------|------|--------|---------|--------|
| a | 1..6 | 3 bits | 1..5 | 3 bits | 1, 3, 5 | 2 bits |
| b | 1..6 | 3 bits | 2..6 | 3 bits | 2, 4, 6 | 2 bits |

Ce tableau montre que la seconde méthode d'optimisation permet de gagner un bit sur le code de position d'un élément d'un groupe séquence.
Par ailleurs, dans le cas où la position des noeuds "fils" rattachés à un noeud "père" dans une structure, est définie de manière à n'autoriser qu'une seule possibilité, les méthodes d'optimisation exposées ci-dessus du codage de la position permettent d'aboutir à une suppression complète de ce code de position dans le code du segment correspondant. Il s'agit par exemple du cas d'une séquence d'éléments dans laquelle tous les éléments apparaissent une seule fois :

$$SEQ[1, 1](e1[1,1], e2[1,1], \ldots, en[1,1])$$

Dans le cas d'un groupe de type CHOICE, ce codage peut également être optimisé en calculant la limite maximum de la position de chaque élément $e_i$ du groupe. Cette limite maximum $P_{max}$ pour un élément $e_i$ ($1 \leq i \leq n$, n étant le nombre d'éléments du groupe) peut être obtenue à l'aide de la formule suivante :

$$P_{max_i} = (max_{ch} - 1) \cdot \max_{k=1}^{n}(max_{ek}) + max_{ej} \qquad (9)$$

Sur la figure 2, la définition d'un segment d'un chemin dans un arbre de schéma de structure comprend un champ contenant un code de noeud 12, c'est-à-dire un numéro de couple (élément, type), et un code de position 13 du noeud destination du segment, par rapport aux autres noeuds rattachés au noeud d'origine T du segment, c'est-à-dire aux autres éléments contenus dans l'élément.

Il est à noter que le codage de la position d'un noeud est effectué indépendamment du type du noeud. Dans la norme XML au contraire, cette position est repérée par rapport au type du noeud. Dans l'exemple ".../T/b[1], b est le premier noeud b du noeud T, mais pas forcément le premier élément du noeud T.

Un chemin 10 dans une arborescence de schéma de structure est donc défini par une succession de segments 11, chaque segment comprenant au moins un code de noeud 12 et un éventuellement un code de position 13.

A ce sujet, dans certains cas, il peut être avantageux de retirer des codes de segment 11, les codes 13 de position de tous les noeuds référencés dans un code de chemin 10, et placés à part dans une zone prévue à cet effet dans le code du chemin.

Il est ensuite nécessaire d'insérer un code délimiteur 14' marquant la fin de la séquence de segments définissant un chemin dans la structure du document, et donc le début des informations codées relatives à l'élément du document, référencé par le chemin.

Par ailleurs, le langage XML permet d'associer des attributs aux différents éléments d'information d'un document. Dans ce contexte, si l'on veut en outre pouvoir définir un chemin jusqu'à un attribut d'un élément, on prévoit d'associer chaque code de segment 11 à un code 14 de type de segment (figure 2) permettant de distinguer si l'objet destination du segment est un autre élément appelé élément "fils" du noeud d'origine du segment ou un attribut du noeud d'origine.

Comme précédemment, le code d'un segment 11 entre un élément d'information et un attribut de cet élément comprend un code d'attribut obtenu en numérotant tous les attributs possibles de l'élément. Par contre, comme les attributs d'un élément ne sont pas ordonnés, il n'est pas nécessaire de prévoir un champ position dans le code de segment entre un élément et un attribut.

Avantageusement, les codes de segment vers un élément ou vers un attribut d'élément sont définis par le tableau suivant :

Taleau 4

| Code | Signification |
|------|---------------|
| 00 | aller vers le père |
| 01 | aller vers la table des attributs |
| 10 | aller vers la table des éléments |
| 11 | Indicateur de fin de chemin |

Dans l'exemple précédent (figures 1a, 1b), le segment entre l'élément T et le troisième élément b est complètement défini par le code suivant :

"10 100 10"

Selon l'invention tel qu'illustrée sur la figure 2, un chemin dans une arborescence est donc constitué d'une succession de codes de segments 11 tels que définis précédemment, qui se termine par un code de type fin de chemin 14' à savoir "11" d'après le Tableau 4.

En outre, dans le Tableau 4, le code "00" permet de définir la position d'un élément dans un document structuré de manière relative par rapport à un élément traité précédemment. Il permet ainsi d'introduire un code de segment d'un autre élément relié au noeud d'origine du segment précédent ou d'un attribut de ce noeud. Ce code peut également être suivi d'autres codes identiques pour remonter de plusieurs noeuds dans l'arborescence du schéma de structure du document.

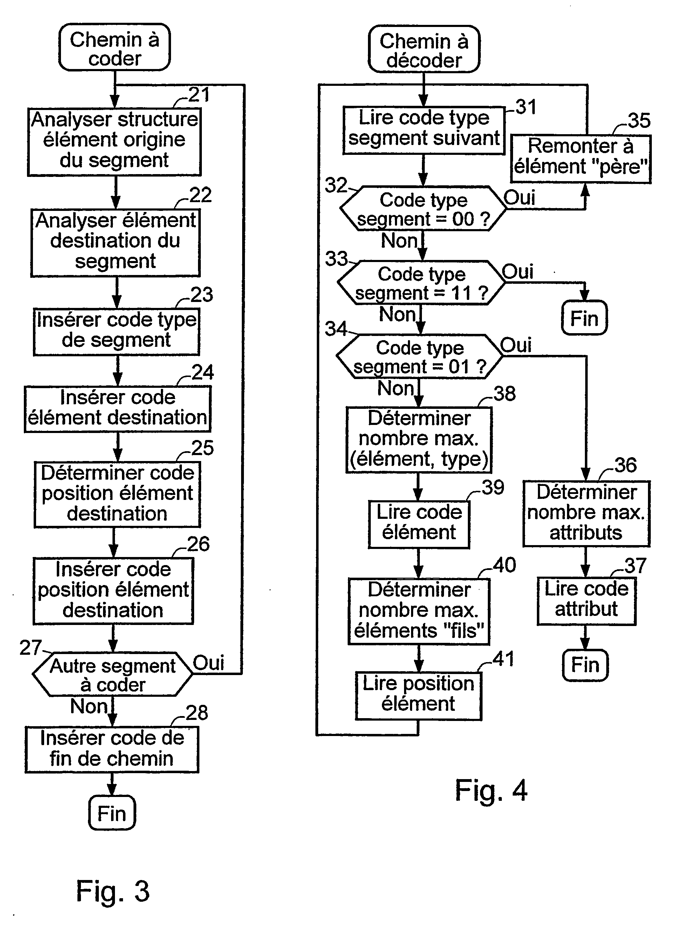

La figure 3 montre un organigramme illustrant le traitement effectué par un calculateur programmé pour effectuer le codage de chemin, selon l'invention.

Sur cette figure, le traitement de codage comprend une étape préalable d'analyse de la structure du document pour déterminer pour chacun des éléments d'information de la structure, le contenu du Tableau 2, la liste des attributs de l'élément et le nombre maximum d'éléments "fils" compris dans l'élément.

A partir du chemin à coder qui peut être présenté sous la forme d'un chemin XML, tel que mentionné ci-dessus, le calculateur de codage selon l'invention exécute l'étape 21 consistant à lire le nom de l'élément origine du premier segment du chemin à coder. A l'étape 22, le calculateur de codage détermine si l'objet destination du segment en cours est un attribut ou un élément d'information. A l'étape 23, le calculateur de codage insère dans le code de chemin 10 à déterminer, le code de type de segment 14 qui vaut "01" ou "10", selon que l'objet destination du segment en cours est un attribut ou un élément. Le calculateur de codage exécute ensuite l'étape 24 d'insertion du code d'attribut ou code de couple (élément, type) 12 lu dans le Tableau 2 correspondant à l'élément origine du segment en cours de codage. Si l'objet destination du segment en cours est un attribut, le traitement de codage est terminé.

Si l'objet destination est un élément d'informations, le calculateur de codage détermine à partir du chemin à coder, la position de l'élément destination du segment en cours, et détermine le code binaire de cette position en fonction du nombre maximum d'éléments reliés à l'élément origine du segment. A l'étape 26, il insère le code de position 13 ainsi déterminé dans le code du chemin, à la suite du code 12 du couple (élément, type).

Si à l'étape 27, le chemin à coder comprend un autre segment, le calculateur de codage exécute les étapes 21 à 27 sur le segment suivant, c'est-à-dire en considérant que le noeud d'origine du segment à coder est le noeud destination du segment précédemment codé. Dans le cas contraire, il insère le code 14' de type de segment "11" marquant la fin du code du chemin (étape 28).

Comme précédemment mentionné, le chemin à coder peut être défini de manière relative, par rapport à un élément d'informations de destination d'un chemin codé précédemment. Dans ce cas, le nouveau chemin à coder en mode relatif comprend tout d'abord un ou plusieurs codes de type de segment égaux à "00", le nombre de ces codes indiquant de combien de niveaux il faut remonter dans la structure hiérarchique du schéma de structure pour atteindre le noeud à référencer par le nouveau chemin à coder.

La figure 4 montre un organigramme illustrant le traitement effectué par un calculateur programmé pour décoder des chemins, selon l'invention.

Un tel calculateur effectue également une analyse préalable du schéma de structure du document pour obtenir, pour chaque élément d'information de la structure, le Tableau 2, une table d'attributs et le nombre maximum d'éléments "fils" compris dans l'élément.

A l'étape 31, le calculateur de décodage lit les deux premiers bits du chemin codé 10, donnant un code de type de segment 14 tel que défini par le Tableau 4.

Si le code de segment vaut "10" indiquant que l'objet suivant dans le chemin est un élément d'information (étapes 32 à 34), le calculateur de décodage lit à l'étape 38 le Tableau 2 correspondant au premier élément, pour déterminer sur combien de bits sont codés les couples (élément, type) de l'élément. Dans le cas d'un chemin absolu, le premier élément est l'élément racine de la structure du document.

A l'étape 39, il lit dans le code de chemin le code 12 du premier élément sur le nombre de bits ainsi déterminé, et détermine à l'aide du code lu et du Tableau 2 correspondant au premier élément, le nom et le type de l'élément qui correspond à l'élément destination du premier segment. A partir du nombre maximum d'éléments "fils" contenus dans le premier élément, il détermine à l'étape 40 le nombre de bits à lire ensuite dans le code de chemin 10 à décoder et lit (étape 41) le code de position 13 de l'élément dans le code de chemin sur le nombre de bits ainsi déterminés. Ensuite, le calculateur de décodage exécute les étapes 31 à 41 pour le code de segment 11 suivant dans le code de chemin 10 à décoder, le noeud destination du segment précédemment décodé devenant le noeud d'origine du nouveau segment à décoder.

Si au cours des étapes 32 à 34, le code de type de segment 14 lu dans le code de chemin à décoder vaut "01", l'objet destination du segment en cours de décodage est un attribut de l'élément en cours. Dans ce cas, le calculateur de décodage lit la table des attributs de l'élément en cours pour déterminer sur combien de bits est codé le numéro d'attribut dans le code de chemin (étape 36), et lit le nombre de bits ainsi déterminés dans le code de chemin pour obtenir le numéro d'attribut (étape 37), ce qui permet de déterminer l'attribut destination du segment en cours en utilisant la table des attributs de l'élément en cours. Le traitement de décodage du chemin est alors terminé.

Si au cours des étapes 32 à 34, le code de segment 14 lu dans le code de chemin à décoder vaut "11 ", le décodage du code de chemin est également terminé. Si le code de segment vaut "00", cela signifie que le chemin à décoder a été codé en mode relatif et qu'il faut remonter à l'élément d'information d'origine du segment qui vient d'être décodé (étape 35). Si ce code apparaît à nouveau, le calculateur de décodage remonte encore d'un niveau dans l'arborescence pour se positionner au niveau du noeud situé au-dessus du noeud en cours.

En d'autres termes, chaque fois que le code "00" apparaît, le segment à décoder suivant a pour élément d'informations de destination le noeud d'origine du segment à décoder précédent.

Le code de fin de chemin 14' du code de chemin 10 marque le début des informations codées contenues dans l'élément d'information destination du dernier segment ainsi décodé.

On peut prévoir en outre un code particulier placé au début d'un code de chemin 10 pour indiquer si le chemin qui suit est codé en mode relatif ou en mode absolu. Si l'on est en mode absolu, l'élément d'informations du premier segment est le noeud racine de la structure arborescente du document. Si le chemin est codé en mode relatif, le calculateur de décodage se positionne sur l'élément "père" de l'élément en cours.

**Revendications**

1. Procédé de codage d'un chemin dans une structure hiérarchique de document structuré, définie par un schéma de structure de document, ce chemin étant défini par une succession de segments, chaque segment reliant un noeud origine et un noeud destination, chaque noeud représentant un élément d'informations du document, chaque élément d'informations étant associé dans le schéma de structure à au moins un type d'informations,
   **caractérisé en ce qu'**il comprend :

   - une phase préalable comportant une étape consistant à associer à chaque noeud considéré du schéma de structure, une liste de couples constitués d'un nom et un type d'élément d'informations, représentés par tous les noeuds susceptibles d'être rattachés directement au noeud considéré, et à associer un code binaire respectif à chaque couple de nom et type d'élément d'informations, et
   - une phase de codage du chemin comprenant une étape consistant pour chaque segment du chemin à coder, à déterminer et insérer dans le code de chemin un code binaire de noeud (12) associé au couple nom - type du noeud destination du segment.

2. Procédé de codage selon la revendication 1,
   **caractérisé en ce que** la phase de codage de chemin comporte en outre une étape consistant à déterminer un code binaire (13) de position du noeud destination du segment, par rapport aux autres noeuds susceptibles d'être rattachés directement au noeud d'origine du segment.

3. Procédé de codage selon la revendication 1 ou 2,
   **caractérisé en ce que** la phase de codage de chemin comporte en outre une étape consistant à générer un code (10) de chemin comprenant une succession de codes de segments (11), chaque code de segment comprenant un code binaire de noeud (12) du noeud destination du segment, et un code binaire de position (13) du noeud destination du segment.

4. Procédé de codage selon la revendication 1 ou 2,
   **caractérisé en ce que** la phase de codage de chemin comporte en outre une étape consistant à générer un code (10) de chemin comprenant une succession de codes de segments (11), chaque code de segment comprenant un code binaire de noeud (12) du noeud destination du segment, et une séquence de codes de position (13) donnant la position de tous les noeuds référencés dans la succession de code de segments.

5. Procédé de codage selon l'une des revendications 1 à 4,
   **caractérisé en ce que** la phase préalable comprend en outre une étape consistant à déterminer un nombre maximum de noeuds susceptibles d'être rattachés directement au noeud considéré, pour déterminer la taille du code binaire (13) de position de noeud.

6. Procédé de codage selon l'une des revendications 1 à 5,
   **caractérisé en ce que** au moins l'un des éléments d'informations de la structure du document comprend des attributs, le chemin à coder ayant pour élément destination un attribut, la phase de codage comprenant en outre une étape d'insertion dans le code (11) de chaque segment d'un code de type de segment (14) indiquant si le noeud destination du segment est un attribut ou un élément d'informations.

7. Procédé de codage selon l'une des revendications 1 à 6,
   **caractérisé en ce que** la phase de codage comprend en outre une étape d'insertion dans le code de chemin (10) d'un code de fin de chemin (14').

8. Procédé de codage selon la revendication 7,

**caractérisé en ce que** le code de fin de chemin (14') est un code de type de segment (14) ayant une valeur prédéfinie.

9. Procédé de codage selon l'une des revendications 6 à 8,
   **caractérisé en ce que** le noeud d'origine de chaque segment est situé à un niveau hiérarchique supérieur à celui du noeud destination dans le schéma de structure du document, et **en ce que** la phase de codage comprend en outre une étape d'insertion dans le code de chemin d'au moins un code de type de segment (14) ayant une valeur prédéfinie indiquant que le noeud d'origine du segment à coder suivant est le noeud de destination du segment à coder précédent.

10. Procédé de codage selon l'une des revendications 1 à 9,
    **caractérisé en ce que** la phase de codage comprend en outre une étape d'insertion dans le code de chemin (10) d'un code indiquant si le chemin codé est un chemin absolu depuis le noeud racine du document, ou un chemin relatif depuis un noeud quelconque du schéma de structure du document.

11. Procédé de décodage d'un code de chemin (10) dans une structure hiérarchique de document structuré, définie par un schéma de structure de document, ce code de chemin comprenant une succession de codes de segments (11), chaque segment reliant un noeud d'origine à un noeud de destination constituant le noeud d'origine du segment suivant, chaque noeud représentant un élément d'informations du document, chaque élément d'informations étant associé dans le schéma de structure à au moins un type d'informations,
    **caractérisé en ce que** chaque segment est défini dans le code de chemin (10) au moins par un code binaire de noeud (12) représentant un couple nom - type, constitué d'un nom et d'un type d'élément d'informations de l'élément d'information représenté par le noeud de destination du segment, le procédé comprenant :

    - une phase préalable consistant à associer à chaque noeud considéré du schéma de structure, une liste de couples nom - type d'élément d'informations constitués d'un nom et d'un type d'éléments d'informations, représentés par tous les noeuds susceptibles d'être rattachés directement au noeud considéré, et à associer un code binaire respectif à chaque couple nom - type d'élément d'informations, et
    - une phase de décodage du code de chemin consistant pour segment du code de chemin (10) à décoder, à décoder le code de noeud (12) représentant le couple nom, type du noeud destination du code de segment à l'aide de la liste des couples nom - type du noeud destination.

12. Procédé de décodage selon la revendication 11,
    **caractérisé en ce que** chaque segment comprend en outre dans le code de chemin (10) à décoder un code de position (13) du noeud de destination par rapport aux autres noeuds susceptibles d'être reliés directement au noeud d'origine du segment, la phase de décodage comprenant en outre une étape consistant pour chaque segment, à décoder le code binaire de position (13) du noeud destination du segment, en fonction des positions respectives de tous les noeuds susceptibles d'être rattachés directement au noeud d'origine du segment.

13. Procédé de décodage selon la revendication 11 ou 12,
    **caractérisé en ce que** le décodage du code binaire de noeud (12) représentant le couple nom-type d'élément d'informations comprend une étape de détermination de la taille en nombre de bits de ce code et de recherche de ce code dans la liste des couples nom - type du noeud d'origine du segment.

14. Procédé de décodage selon l'une des revendications 11 à 13,
    **caractérisé en ce que** le décodage du code binaire de position (13) du noeud destination du segment comprend la détermination de la taille en nombre de bits de ce code en fonction du nombre maximum de noeuds susceptibles d'être rattachés directement au noeud d'origine du segment.

15. Procédé de décodage selon l'une des revendications 11 à 14,
    **caractérisé en ce que** chaque code de segment (11) comprend un code de type de segment (14), la phase de décodage du chemin comprenant en outre pour chaque segment, le décodage du code de type de segment.

16. Procédé de décodage selon la revendication 15,
    **caractérisé en ce que** le code de type de segment (14) de chaque code de segment (11) du code de chemin (10) permet de déterminer si le segment a pour noeud de destination un élément d'information ou un attribut du noeud d'origine du segment.

17. Procédé de décodage selon la revendication 15 ou 16,

**caractérisé en ce qu'**il comprend la détermination de la fin du code de chemin, qui est marquée par un code de type de segment (14') ayant une première valeur prédéfinie.

18. Procédé de décodage selon la revendication 15 ou 17,
**caractérisé en ce que** si le code de type de segment (14) a une seconde valeur prédéfinie, le code de segment (11) à décoder suivant dans le code de chemin (10) a pour noeud de destination le noeud d'origine du segment à décoder précédent.

**Claims**

1. Method for encoding a path in a structured document hierarchical structure defined by a document structure schema, this path being defined by a sequence of segments, each segment connecting a source node and a destination node, each node representing an information element in the document, each information element being associated with at least one information type in the structure schema,
**characterized in that** it comprises:

a preliminary phase comprising a step of associating a list of pairs composed of a name and type of information element with each node considered in the structure schema, represented by all nodes that could be directly attached to the node considered, and to associate a binary code with each information element name and type pair, and
a path encoding phase comprising a step of determining a binary code for the node (12) associated with the segment destination node name - type pair, for each path segment to be encoded, and inserting it in the path code.

2. Encoding method according to claim 1, **characterized in that** the path encoding phase also comprises a step of determining a binary position code (13) for the segment destination node, to define the position with respect to other nodes that might be attached directly to the segment source node.

3. Encoding method according to claim 1 or 2, **characterized in that** the path encoding phase also comprises a step of generating a path code (10) comprising a sequence of segment codes (11), each segment code comprising a node binary code (12) for the segment destination node, and a binary position code (13) for the segment destination node.

4. Encoding method according to claim 1 or 2, **characterized in that** the path encoding phase also comprises a step of generating a path code (10) comprising a sequence of segment codes (11), each segment code comprising a node binary code (12) for the segment destination node and a sequence of position codes (13) giving the position of all nodes referenced in the sequence of segment codes.

5. Encoding method according to one of claims 1 to 4, **characterized in that** the preliminary phase also comprises a step of determining a maximum number of nodes that could be directly attached to the node considered, to determine the size of the node position binary code (13).

6. Encoding method according to one of claims 1 to 5, **characterized in that** at least one of the document structure information elements comprises attributes, the path to be encoded having an attribute as the destination element, the encoding phase further comprising a step of inserting a segment type code (14) in the code (11) of each segment, indicating if the segment destination node is an attribute or an information element.

7. Encoding method according to one of claims 1 to 6, **characterized in that** the encoding phase further comprises a step of inserting an end of path code (14') in the path code (10).

8. Encoding method according to claim 7, **characterized in that** the end of path code (14') is a segment type code (14) with a predefined value.

9. Encoding method according to one of claims 6 to 8, **characterized in that** the source node of each segment is located at a higher hierarchical level than the destination node in the document structure schema, and the encoding phase further comprises a step of inserting at least one segment type code (14) with a predefined value into the path code, indicating that the next segment source node to be encoded is the previous segment destination node to be encoded.

**10.** Encoding method according to one of claims 1 to 9, **characterized in that** the encoding phase further comprises a step of inserting a code in the path code (10), to indicate if the encoded path is an absolute path starting from the document root node, or a relative path starting from an arbitrary node in the document structure schema.

**11.** Method for decoding a path code (10) in a hierarchical structured document structure, defined by a document structure schema, this path code comprising a sequence of segment codes (11), each segment connecting a source node to a destination node forming the source node of the next segment, each node representing an information element of the document, each information element being associated in the structure schema with at least one information type,

**characterized in that** each segment is defined in the path code (10) by at least one node binary code (12) representing a name - type pair, composed of an information element name and type, for the information element represented by the segment destination node, the method comprising:

a preliminary phase of associating a list of information element name - type pairs with each node considered in the structure schema, each pair consisting of a name and a type of information element, represented by all nodes that could be attached directly to the node considered, and to associate a binary code corresponding to each information element name - type pair, and

a path code decoding phase of decoding the node code (12) representing the name - type pair of the segment code destination node, using the list of destination node name - type pairs, for each path code (10) segment to be decoded.

**12.** Decoding method according to claim 11, **characterized in that** each segment further comprises a position code (13) of the destination node with respect to other nodes that could be connected directly to the segment source node, within the path code (10) to be decoded, the decoding phase also comprising a step of decoding, for each segment, the binary position code (13) of the segment destination node, as a function of the corresponding positions of all nodes that could be attached directly to the segment source node.

**13.** Decoding method according to claim 11 or 12, **characterized in that** decoding of the binary code for the node (12) representing the information element name - type pair comprises a step of determining the size of this code as a number of bits and to search for this code in the list of name - type pairs for the segment source node.

**14.** Decoding method according to one of claims 11 to 13, **characterized in that** decoding of the binary position code (13) of the segment destination node comprises a step of determining the size of this code as a number of bits, as a function of the maximum number of nodes that could be attached directly to the segment source node.

**15.** Decoding method according to one of claims 11 to 14, **characterized in that** each segment code (11) comprises a segment type code (14), the path-decoding phase also comprising decoding of the segment type code for each segment.

**16.** Decoding method according to claim 15, **characterized in that** the segment type code (14) for each segment code (11) in the path code (10) is used to determine if the destination node of the segment is an information element or an attribute of the segment source node.

**17.** Decoding method according to claim 15 or 16, **characterized in that** it comprises a step of determining the end of path code, which is marked by a segment type code (14') with a first predefined value.

**18.** Decoding method according to claim 15 or 17, **characterized in that** if the segment type code (14) has a second predefined value, the next segment code (11) to be decoded in the path code (10) has the same destination node as the previous segment source node to be decoded.

**Patentansprüche**

**1.** Verfahren zur Codierung eines Pfades in einer hierarchischen Struktur eines strukturierten Dokuments, das durch ein Strukturschema des Dokuments definiert wird, wobei dieser Pfad durch eine Folge von Segmenten definiert wird, wobei jedes Segment einen Ursprungsknoten und einen Zielknoten verbindet, wobei jeder Knoten ein Informationselement des Dokuments repräsentiert, wobei jedes Informationselement in dem Strukturschema wenigstens einem Informationstyp zugeordnet wird,

**dadurch gekennzeichnet, dass** dieses umfasst:

- eine vorhergehende Phase mit einem Schritt, der darin besteht, jedem betreffenden Knoten des Strukturschemas eine Liste von Paaren zuzuordnen, die aus einem Namen und einem Informationselementtyp gebildet werden, die durch alle die Knoten repräsentiert werden, die direkt mit dem betreffenden Knoten verknüpft werden können, und jedem Paar aus Namen und Informationselementtyp einen jeweiligen Binärcode zuzuordnen, und
- eine Codierungsphase des Pfades mit einem Schritt, der darin besteht, jedes Segment des Pfades zu codieren, einen Binärcode des Knotens (12), der dem Name/Typ-Paar des Zielknotens des Segments zugeordnet ist, zu bestimmen und in den Code des Pfades einzufügen.

2. Verfahren zur Codierung nach Anspruch 1,
**dadurch gekennzeichnet, dass** die Codierungsphase des Pfades ferner einen Schritt umfasst, der darin besteht, einen Binärcode (13) der Position des Zielknotens des Segments in Bezug zu weiteren Knoten zu bestimmen, die direkt mit dem Ursprungsknoten des Segments verknüpft werden können.

3. Verfahren zur Codierung nach Anspruch 1 oder 2,
**dadurch gekennzeichnet, dass** die Codierungsphase des Pfades ferner einen Schritt umfasst, der darin besteht, einen Code (10) des Pfades zu erzeugen, der eine Folge von Segmentcodes (11) umfasst, wobei jeder Segmentcode einen Knoten-Binärcode (12) des Zielknotens des Segments und einen Positions-Binärcode (13) des Zielknotens des Segments umfasst.

4. Verfahren zur Codierung nach Anspruch 1 oder 2,
**dadurch gekennzeichnet, dass** die Phase zur Codierung des Pfades ferner einen Schritt umfasst, der darin besteht, einen Code (10) des Pfades in einer Folge von Segmentcodes (11) zu erzeugen, wobei jeder Segmentcode einen Knoten-Binärcode (12) des Zielknotens des Segments und eine Folge von Positions-Codesequenzen (13) umfasst, welche die Position aller Bezugsknoten in der Folge von Segmentcodes gibt.

5. Verfahren zur Codierung nach einem der Ansprüche 1 bis 4,
**dadurch gekennzeichnet,**
**dass** die vorhergehende Phase umfasst ferner einen Schritt, der darin besteht, eine Maximalzahl von Knoten zu bestimmen, die direkt an den betreffenden Knoten angeknüpft werden können, um die Größe des Positions-Binärcodes (13) des Knotens zu bestimmen.

6. Verfahren zur Codierung nach einem der Ansprüche 1 bis 5,
**dadurch gekennzeichnet, dass** wenigstens eines der Informationselemente der Struktur des Dokuments Attribute umfasst, wobei der zu codierende Pfad für das Zielelement ein Attribut hat, wobei die Codierungsphase ferner einen Schritt zur Einfügung in den Code (11) jedes Segments eines Segmenttyp-Codes (14) umfasst, der anzeigt, ob der Zielknoten des Segments ein Attribut oder ein Informationselement ist.

7. Verfahren zur Codierung nach einem der Ansprüche 1 bis 6,
**dadurch gekennzeichnet, dass** die Codierungsphase ferner einen Schritt zur Einfügung in den Pfad-Code (10) eines Pfadende-Codes (14') umfasst.

8. Verfahren zur Codierung nach Anspruch 7,
**dadurch gekennzeichnet, dass** der Pfadende-Code (14') ein Segmenttyp-Code (14) ist, der einen vorbestimmten Wert hat.

9. Verfahren zur Codierung nach einem der Ansprüche 6 bis 8,
**dadurch gekennzeichnet, dass** der Ursprungsknoten jedes Segments in dem Strukturschema des Dokuments auf einem höheren hierarchischen Niveau als der Zielknoten liegt, und dass die Codierungsphase ferner einen Schritt zur Einfügung in den Pfad-Code wenigstens eines Segmenttyp-Codes (14) umfasst, der einen vorbestimmten Wert hat und anzeigt, dass der Ursprungsknoten des zu codierenden folgenden Segments der Zielknoten des vorhergehenden zu codierenden Segments ist.

10. Verfahren zur Codierung nach einem der Ansprüche 1 bis 9,
**dadurch gekennzeichnet, dass** die Codierungsphase ferner einen Schritt zur Einfügung in den Pfad-Code (10) eines Codes umfasst, der anzeigt, ob der codierte Pfad ein absoluter Pfad bis zum Wurzelknoten des Dokuments ist oder ein relativer Pfad bis zu einem beliebigen Knoten des Strukturschemas des Dokuments.

**11.** Verfahren zur Decodierung eines Pfad-Codes (10) in einer hierarchischen Struktur eines strukturierten Dokuments, definiert durch ein Strukturschema des Dokuments, wobei dieser Pfad-Code eine Folge von Segmentcodes (11) umfasst, wobei jedes Segment einen Ursprungsknoten mit einem Zielknoten verbindet, der den Ursprungsknoten des folgenden Segments bildet, wobei jeder Knoten ein Informationselement des Dokuments repräsentiert, wobei jedes Informationselement in dem Strukturschema wenigstens einem Informationstyp zugeordnet wird,
**dadurch gekennzeichnet, dass** jedes Segment in dem Pfad-Code (10) wenigstens durch einen Knoten-Binärcode (12) definiert wird, der ein Name/Typ-Paar repräsentiert, das durch einen Namen und einen Informationselementtyp des durch den Zielknoten des Segments repräsentierten Informationselements bildet, wobei das Verfahren umfasst:

- eine vorhergehende Phase, die darin besteht, jedem betreffenden Knoten des Strukturschemas eine Liste von Paaren Name/Informationselementtyp zuzuordnen, die durch einen Namen und einen Informationselementtyp gebildet werden, die durch alle Knoten repräsentiert werden, die direkt mit dem betreffenden Knoten verknüpft werden können, und einen jeweiligen Binärcode jedem Paar Name/Informationselementtyp zuzuordnen, und

- eine Decodierungsphase des Pfad-Codes, die für jedes decodierende Segment des Pfad-Codes (10) darin besteht, den Knoten-Code (12) mithilfe der Liste von Paaren Name/Typ des Zielknotens zu dekodieren, der das Paar Name/Typ des Zielknotens des Segmentcodes repräsentiert.

**12.** Verfahren zur Decodierung nach Anspruch 11,
**dadurch gekennzeichnet, dass** jedes Segment ferner in dem decodierenden Pfad-Code (10) einen Positionscode (13) des Zielknotens in Bezug zu den weiteren Knoten umfasst, die direkt mit dem Ursprungsknoten des Segments verbunden werden können, wobei die Decodierungsphase ferner einen Schritt umfasst, der für jedes Segment darin besteht, den Positions-Binärcode (13) des Zielknotens des Segments in Abhängigkeit von jeweiligen Positionen aller Knoten, die direkt mit dem Ursprungsknoten des Segments verknüpft werden können, zu dekodieren.

**13.** Verfahren zur Decodierung nach Anspruch 11 oder 12,
**dadurch gekennzeichnet, dass** die Decodierung des Knoten-Binärcodes (12), der das Paar Name/Informationselementtyp repräsentiert, einen Schritt zur Bestimmung der Größe der Bitzahl dieses Codes und der Suche dieses Codes in der Liste der Paare Name/Typ des Ursprungsknotensegments umfasst.

**14.** Verfahren zur Decodierung nach einem der Ansprüche 11 bis 13,
**dadurch gekennzeichnet, dass** die Decodierung des Positions-Binärcodes (13) des Zielknotens des Segments die Bestimmung der Größe der Bitzahl dieses Codes in Abhängigkeit von der maximalen Zahl von Knoten umfasst, die direkt mit dem Ursprungsknoten des Segments verknüpft werden können.

**15.** Verfahren zur Decodierung nach einem der Ansprüche 11 bis 14,
**dadurch gekennzeichnet, dass** jeder Segmentcode (11) einen Segmenttyp-Code (14) umfasst, wobei die Decodierungsphase des Pfades für jedes Segment die Decodierung des Segmenttyp-Codes umfasst.

**16.** Verfahren zur Decodierung nach Anspruch 15,
**dadurch gekennzeichnet, dass** der Segmenttyp-Code (14) jedes Segmentcodes (11) des Pfad-Codes (10) ermöglicht, zu bestimmen, ob das Segment als Zielknoten ein Informationselement oder ein Attribut des Ursprungsknotens des Segments hat.

**17.** Verfahren zur Decodierung nach Anspruch 15 oder 16,
**dadurch gekennzeichnet, dass** dieses die Bestimmung des Endes des Pfadcodes umfasst, das durch einen Segmenttyp-Code (14') mit einem ersten vorbestimmten Wert markiert wird.

**18.** Verfahren zur Decodierung nach Anspruch 15 oder 17,
**dadurch gekennzeichnet, dass**, wenn der Segmenttyp-Code (14) einen zweiten vorbestimmten Wert hat, der zu decodierende Segmentcode (11), der in dem Pfad-Code (10) folgt, als Zielknoten den Ursprungsknoten des vorhergehenden zu decodierenden Segments hat.

Fig. 1a

Fig. 1b

| Code Chemin | | | | |
|---|---|---|---|---|
| | Code Segment | | | |
| • • • | Code Type | Code Nœud | Code position | • • • | Code fin |

Fig. 2

Fig. 3

Fig. 4